# EUROPÄISCHE PATENTSCHRIFT

(11) **EP 3 482 104 B1**
(45) Veröffentlichungstag und Bekanntmachung des Hinweises auf die Patenterteilung: **16.02.2022**
(21) Anmeldenummer: 17735523.7
(22) Anmeldetag: 05.07.2017
(51) Int. Cl.: F16H 57/02, B60N 2/02, F16H 57/025, H02K 7/116, H01R 33/46, H02K 5/26

(54) **GETRIEBEEINHEIT, ELEKTRISCHER GETRIEBEMOTOR UND SITZ**
GEAR UNIT, ELECTRIC GEAR MOTOR AND SEAT
UNITÉ DE TRANSMISSION, MOTORÉDUCTEUR ÉLECTRIQUE ET SIÈGE

(30) Priorität: 05.07.2016 DE 102016212256; 13.09.2016 DE 102016217449
(43) Veröffentlichungstag der Anmeldung: 15.05.2019
(73) Patentinhaber: KEIPER Seating Mechanisms Co., Ltd., Shanghai 201315 (CN)
(72) Erfinder: HOFFMANN, Andreas, 42489 WÜLFRATH (DE); KUNTZ, Oliver, 42929 Wermelskirchen (DE)
(74) Vertreter: Liedtke & Partner Patentanwälte
(86) Internationale Anmeldenummer: PCT/EP2017/066765
(87) Internationale Veröffentlichungsnummer: WO 2018/007439

(56) Entgegenhaltungen:
- DE-A1- 10 319 187
- DE-A1-102010 031 170
- DE-B3-102010 008 880

## Beschreibung

Die Erfindung betrifft eine Getriebeeinheit, die mit einem Elektromotor zusammenbaubar ist.

Die Erfindung betrifft außerdem ein Trägerelement mit mindestens einer Arretierkomponente zur form- und/oder kraftschlüssigen Befestigung eines Elektromotors an dem Trägerelement.

Die Erfindung betrifft außerdem einen elektrischen Getriebemotor, der die vorgenannte Getriebeeinheit sowie einen Elektromotor umfasst. Der elektrische Getriebemotor wird im Weiteren auch Aktuator genannt.

Die Erfindung betrifft außerdem einen Sitz.

Ein Aktuator umfasst in der Regel zumindest einen Elektromotor und eine Getriebeeinheit. Ein solcher Getriebemotor oder Aktuator dient beispielsweise einer Verstellung eines Sitzes, insbesondere eines Fahrzeugsitzes in verschiedenen Funktionen, wie zum Beispiel einer Längs-, Höhen- und Neigungsverstellung.

Die Verstellung einer Position des Sitzes kann manuell beispielsweise mittels eines Hebels und/oder eines Griffs oder elektrisch mittels eines Aktuators erfolgen, welcher über ein Bedienelement betätigbar ist.

Die Erfindungen dienen der Anbindung des Elektromotors an eine Getriebeeinheit oder an eine Motorhalteeinrichtung.

Aus DE 10 2010 031 170 A1 sind ein Elektromotor und eine Getriebe-Antriebseinheit für Stellantriebe in einem Fahrzeug bekannt.

Aus DE 10 2005 030 217 A1 sind eine Motor-Getriebe-Anordnung, ein Motorgehäuse sowie eine Getriebegehäuseanordnung bekannt.

Des Weiteren ist aus DE 103 19 187 A1 eine elektrische Maschine mit einer Bajonettverbindung bekannt, wobei die Bajonettverbindung ein aufnehmendes Element und ein vorstehendes Element umfasst und wobei das vorstehende Element mit dem aufnehmenden Element durch eine relative Drehbewegung der beiden Gehäuseteile zueinander in Eingriff und außer Eingriff bringbar ist.

Der Erfindung liegt die Aufgabe zu Grunde, eine gegenüber dem Stand der Technik verbesserte Getriebeeinheit, mittels der eine Befestigung eines Elektromotors an der Getriebeeinheit gegen unbeabsichtigtes Lösen gesichert wird und mittels der eine an einen Bauraum anpassbare Einbauposition des Elektromotors ermöglicht wird, sowie einen verbesserten elektrischen Getriebemotor oder Aktuator, sowie ein verbessertes Trägerelement, mittels dessen eine Befestigung eines Elektromotors an dem Trägerelement gegen unbeabsichtigtes Lösen gesichert wird, und einen verbesserten Sitz mit einem solchen Aktuator anzugeben.

Hinsichtlich der Getriebeeinheit wird die Aufgabe erfindungsgemäß mit den in Anspruch 1 angegebenen Merkmalen gelöst. Hinsichtlich des Trägerelements wird die Aufgabe erfindungsgemäß mit den in Anspruch 2 angegebenen Merkmalen gelöst. Hinsichtlich des elektrischen Getriebemotors wird die Aufgabe erfindungsgemäß mit den Merkmalen des Anspruchs 3 gelöst. Hinsichtlich des Sitzes wird die Aufgabe erfindungsgemäß mit den in Anspruch 13 angegebenen Merkmalen gelöst.

Vorteilhafte Ausgestaltungen der Erfindungen sind Gegenstand der Unteransprüche.

Eine Getriebeeinheit umfasst mindestens ein Getriebegehäuse mit mindestens einer Arretierkomponente zur form- und/oder kraftschlüssigen Befestigung eines Elektromotors an der Getriebeeinheit. Erfindungsgemäß weist das Getriebegehäuse als zusätzlichen radialen Anschlag eine zusätzliche Arretiereinheit auf, welche in die Arretierkomponente für einen verriegelten Zustand eindrückbar ist. Sowohl die zusätzliche Arretiereinheit als auch die Arretierkomponente sind also Bestandteile des Getriebegehäuses.

Dadurch ist der Elektromotor nicht nur besonders einfach mit der Getriebeeinheit verbindbar, sondern zudem besonders einfach mit dieser in einen verriegelten Zustand bringbar.

Die erfindungsgemäße Getriebeeinheit ermöglicht eine flexible Montage des Elektromotors und eine einfache zusätzliche Fixierung desselben in besonders eng begrenzten Bauräumen, da der Elektromotor mit geringeren Abmessungen und einer verringerten Anzahl von Befestigungselementen ausbildbar ist. Insbesondere mittels des Formschlusses kann eine Montage des Elektromotors an der Getriebeeinheit oder dem Trägerelement vereinfacht werden.

Des Weiteren ist die Arretierkomponente erfindungsgemäß als ein umlaufender Rand oder Flanschkragen ausgebildet, in welchen eine Anzahl von Hinterschnitten eingebracht ist, in welchen der Elektromotor in eine von mehreren vorbestimmbaren Stellungen mittels eines Form- oder Kraftschlusses arretierbar ist. Dadurch ist der Elektromotor besonders einfach mit der Gertriebeeinheit verbindbar und besonders einfach in eine von mehreren vorbestimmbaren Stellungen bringbar, in welcher die zusätzliche Arretiereinheit in die Arretierkomponente für einen verriegelten Zustand eindrückbar ist. Der verriegelte Zustand ist dadurch besonders einfach zu bewirken.

Der erfindungsgemäße elektrische Getriebemotor umfasst
- zumindest einen Elektromotor und
- eine erfindungsgemäße Getriebeeinheit, wobei die Arretierkomponente form- und/oder kraftschlüssig mit dem Motorarretierelement verbindbar ist. Der Elektromotor umfasst dabei eine Befestigungsanordnung zur Befestigung des Elektromotors an der Getriebeeinheit oder einem Trägerelement, wobei die Befestigungsanordnung mindestens ein Motorarretierelement umfasst, wobei das Motorarretierelement derart ausgebildet ist, dass eine Drehposition des Elektromotors relativ zur Getriebeeinheit oder zum Trägerelement voreinstellbar und eine voreingestellte Drehposition des Elektromotors mittels eines Form- oder Kraftschlusses arretierbar ist.

Dabei kann die Arretierung zunächst durch Drehung des Elektromotors erfolgen. Somit ist der Elektromotor in einfacher Art und Weise durch Form- und Reibschluss am Getriebe oder Trägerelement gesichert gehalten. Dadurch, dass das Getriebegehäuse als zusätzlichen radialen Anschlag eine zusätzliche Arretiereinheit aufweist, welche als ein separates Element ausgebildet ist und in die Arretierkomponente für einen verriegelten Zustand eindrückbar ist, ist der Elektromotor auf einfache Weise zusätzlich sicher gegen ein Verdrehen gesichert.

Gemäß einer Ausgestaltung des elektrischen Getriebemotors ist die zumindest eine Arretierkomponente an dem Getriebegehäuse der Getriebeeinheit angeordnet. Bevorzugt ist das Getriebegehäuse an einer Längsverstellereinheit des Sitzes angeordnet. Hier ist ein Bauraum sehr begrenzt, so dass die Anordnung des Elektromotors mit der Befestigungsanordnung, welche die Arretierkomponente und das Motorarretierelement umfasst, besonders einfach ist.

Gemäß einer weiteren Ausgestaltung des elektrischen Getriebemotors weist die Arretierkomponente eine Anzahl von Rastelementen zur Verrastung des Elektromotors mit der Getriebeeinheit, insbesondere dem Getriebegehäuse, oder dem Trägerelement, auf. Mittels der Rastelemente kann der Elektromotor sicher und zuverlässig an der Getriebeeinheit oder am Trägerelement beispielsweise am Sitz befestigt werden. Die Rastelemente sind bevorzugt als Hinterschnitte am Getriebegehäuse ausgebildet.

Gemäß einer weiteren Ausgestaltung des elektrischen Getriebemotors ist das Motorarretierelement dabei derart ausgebildet, dass der Elektromotor in axialer Richtung unverschiebbar festgelegt und mittels einer Drehmomentsperre gegen Verdrehung gesichert ist.

Gemäß einer weiteren Ausgestaltung des elektrischen Getriebemotors umfasst das mindestens eine Motorarretierelement eine radial nach außen abragende Kontur, die an einem stirnseitigen Ende des Elektromotors, insbesondere an einem stirnseitigen Ende eines Elektromotorgehäuses, angeordnet ist.

Bevorzugt ist dabei ein Durchmesser der Kontur größer als ein äußerer Durchmesser des Elektromotorgehäuses.

Mittels der Kontur kann der Formschluss besonders einfach realisiert werden. Die Kontur kann dabei einteilig mit einem Lagerschild des Elektromotorgehäuses ausgebildet sein, welches das Elektromotorgehäuse stirnseitig abschließt und in bekannter Weise einen Gehäusedeckel des Elektromotorgehäuses bildet. Alternativ kann die Kontur auch einteilig mit dem Elektromotorgehäuse ausgebildet sein. Denkbar ist auch, die Kontur separat herzustellen und mit dem Elektromotorgehäuse zu verbinden, beispielsweise mittels Stoffschluss.

Ein Umfangsverlauf der Kontur weist vorzugsweise gleichmäßig verteilte Segmente auf, die in eine Umfangsrichtung jeweils zueinander beabstandet sind. Diese Segmente sind beispielsweise halbkreisförmig oder mehreckig mit Abrundungen ausgebildet. Mittels der Segmente ist eine flexible Anordnung des Elektromotors relativ zum Sitz möglich. Dadurch, dass das Motorarretierelement mehrere Segmente aufweist, die vorzugsweise in gleicher Weise geformt sind, kann in Abhängigkeit einer Anzahl der Segmente eine beliebige Drehposition des Elektromotors relativ zum Sitz eingestellt werden.

Beispielsweise weist das Motorarretierelement sechs Segmente auf, wobei eine rotatorische Stufung der Drehposition des Elektromotors relativ zum Sitz 60° beträgt. D. h., der Elektromotor kann in sechs verschiedenen Drehpositionen relativ zum Sitz angeordnet werden, wobei die Drehpositionen in Bezug auf eine Motorachse des Elektromotors jeweils in einem Winkel von 60° zueinander versetzt sind. Alternativ kann das Motorarretierelement auch weniger oder mehr Segmente aufweisen. Dabei können die Segmente symmetrisch oder unsymmetrisch zueinander angeordnet sein.

Gemäß einer weiteren Ausgestaltung des elektrischen Getriebemotors ist die Arretiereinheit als ein separates Element ausgebildet. Die Arretiereinheit ist also ebenso wie die Arretierkomponente ein Bestandteil des Getriebegehäuses, jedoch gemäß einer ersten Alternative weder einteilig mit der Arretierkomponente ausgebildet noch stoffschlüssig mit der Arretierkomponente verbunden. Gemäß einer zweiten Alternative ist die Arretiereinheit zunächst einteilig und/oder stoffschlüssig mit der Arretierkomponente verbunden, wobei zwischen der Arretiereinheit und der Arretierkomponente eine Sollbruchstelle angeordnet ist, welche durch ein bevorzugt manuelles Drücken auf die Arretiereinheit zunächst bricht, bevor die Arretiereinheit zur Herstellung des verriegelten Zustandes in Richtung des Elektromotors in die Arretierkomponente eingedrückt wird.

Gemäß einer weiteren Ausgestaltung des elektrischen Getriebemotors weist die Arretierkomponente eine Ausnehmung auf, deren Form und Größe mit der Form und Größe der Arretiereinheit derart korrespondiert, dass die Arretiereinheit zur Herstellung des verriegelten Zustandes in Richtung des Elektromotors in dessen Längsrichtung eindrückbar ist. Die Herstellung des verriegelten Zustandes ist dadurch besonders einfach möglich.

Gemäß einer weiteren Ausgestaltung des elektrischen Getriebemotors sind die Arretiereinheit und die Arretierkomponente derart ausgebildet, dass die Arretiereinheit zwar in die Arretierkomponente eindrückbar ist, aber gegen ein Herausfallen gesichert ist, und zwar besonders bevorzugt sowohl im Richtungssinn des Eindrückens, also in Richtung des Elektromotors, als auch in entgegngesetztem Richtungssinn. Dazu weisen die Arretiereinheit und/oder die Arretierkomponente einen Anschlag oder mehrere Anschläge auf.

Bevorzugt weisen die Ausnehmung und die korrspondierende Arretiereinheit eine konische Form auf, wodurch ein Herausfallen der Arretiereinheit zumindest in eine Richtung unterbindbar ist.

Gemäß einer weiteren Ausgestaltung des elektrischen Getriebemotors ist die Arretiereinheit in die Ausnehmung der Arretierkomponente, also in die Arretierkomponente einrastbar. Der verriegelte Zustand ist dadurch besonders sicher und nicht ohne definierte Kraft, insbesondere nicht ohne spezielles Werkzeug, wieder lösbar.

Gemäß einer weiteren Ausgestaltung des elektrischen Getriebemotors sind die Arretiereinheit und die Arretierkomponente derart ausgebildet,

Ein erfindungsgemäßer Sitz umfasst einen erfindungsgemäßen elektrischen Getriebemotor. Die Getriebeeinheit oder das Trägerelement umfasst eine mit dem Motorarretierelement korrespondierende Arretierkomponente, wobei die Arretierkomponente form- und/oder kraft-, insbesondere reibschlüssig mit dem Motorarretierelement verbindbar ist. Die Arretierkomponente ist somit Bestandteil der Befestigungsanordnung, mittels welcher der Elektromotor form- und/oder kraft-, insbesondere reibschlüssig an der Getriebeeinheit oder dem Trägerelement befestigbar ist.

Gemäß einer Ausgestaltung des erfindungsgemäßen Sitzes ist die Arretierkomponente gemäß einer ersten Alternative mehrteilig und gemäß einer zweiten Alternative einteilig ausgebildet. Ist die Arretierkomponente, mit welcher das Motorarretierelement der Befestigungsanordnung zu verbinden ist, mehrteilig ausgeführt, kann der Elektromotor bei einer Montage formschlüssig und mittels Vorspannung spielfrei mit dem Trägerelement des Sitzes oder mit der Getriebeeinheit, insbesondere mit dem Getriebegehäuse, verbunden werden. Bei einer einteiligen Arretierkomponente kann der Elektromotor axial in die Getriebeeinheit, insbesondere in das Getriebegehäuse, oder das Trägerelement und damit in die korrespondierende Arretierkomponente, eingeschoben und anschließend mittels einer Drehbewegung form- und/oder kraft-, insbesondere reibschlüssig mit dem Getriebegehäuse bzw. dem Trägerelement verbunden werden.

Damit ist eine flexible Anordnung des Elektromotors relativ zur Getriebeeinheit, insbesondere zum Getriebegehäuse, oder zum Trägerelement möglich, wobei keine zusätzlichen Befestigungselemente, z. B. Flansche, erforderlich sind. Daraus resultierend kann ein üblicherweise eng begrenzter Bauraum optimal genutzt werden. Des Weiteren ist mittels der Befestigungsanordnung eine variable Drehposition eines elektrischen Anschlusses des Elektromotors relativ zur Getriebeeinheit, insbesondere zum Getriebegehäuse, oder zum Trägerelement möglich. Dies ermöglicht eine Verwendung von Elektromotoren mit einer weitestgehend einheitlichen Position des elektrischen Anschlusses. Vorzugsweise ist eine rotatorische Stufung der Drehposition des elektrischen Anschlusses in Einbaulage des Elektromotors mit maximal 60° möglich. Besonders bevorzugt ist eine feinere rotatorische Abstufung mit weniger als 60° möglich. D. h., der Elektromotor kann in verschiedenen Drehpositionen relativ zur Getriebeeinheit, insbesondere zum Getriebegehäuse, oder zum Trägerelement angeordnet werden, wobei die Drehpositionen in Bezug auf eine Motorachse des Elektromotors jeweils in einem Winkel von maximal 60° zueinander versetzt sind.

Gemäß einer weiteren Ausgestaltung des erfindungsgemäßen Sitzes bildet die Befestigungsanordnung einen Bajonettverschluss. Dies ermöglicht eine schnell herstellbare und wieder lösbare mechanische Verbindung zwischen dem Elektromotor und der Getriebeeinheit, insbesondere dem Getriebegehäuse, oder dem Trägerelement.

Ausführungsbeispiele der Erfindung werden anhand von Zeichnungen näher erläutert. Dabei zeigen:
- Figur 1: schematisch eine perspektivische Ansicht einer Befestigungsanordnung eines Elektromotors an einem Getriebegehäuse gemäß dem Stand der Technik,
- Figur 2: schematische eine Vorderansicht der Befestigungsanordnung gemäß Figur 1,
- Figur 3: schematisch eine perspektivische Ansicht eines Ausführungsbeispiels eines Elektromotors mit einem Motorarretierelement,
- Figur 4: schematisch eine Seitenansicht des Elektromotors gemäß Figur 3,
- Figur 5: schematisch einen Ausschnitt mit dem Motorarretierelement und einem elektrischen Anschluss des Elektromotors gemäß Figur 3,
- Figur 6: schematisch eine Draufsicht auf den Ausschnitt gemäß Figur 5,
- Figur 7: schematisch Vorderansichten zwei verschiedener Ausführungsbeispiele eines Elektromotors,
- Figur 8: schematisch eine perspektivische Darstellung eines Ausführungsbeispiels eines Elektromotors mit einem Motorarretierelement und einem Kraftübertragungselement,
- Figur 9: schematisch eine Vorderansicht des Elektromotors gemäß Figur 8,
- Figur 10: schematisch eine perspektivische Ansicht eines Elektromotors und eines mehrteiligen Getriebegehäuses in einem nicht verbundenen Zustand,
- Figur 11: schematisch eine Schnittdarstellung des Elektromotors und des Getriebegehäuses gemäß Figur 10,
- Figur 12: schematisch eine perspektivische Ansicht eines Elektromotors und eines einteiligen Getriebegehäuses in einem nicht verbundenen Zustand,
- Figur 13: schematisch eine Rückansicht des Elektromotors und des Getriebegehäuses gemäß Figur 12,
- Figuren 14 und 15: schematisch perspektivische Darstellungen des Elektromotors und des Getriebegehäuses gemäß Figur 12 im verbundenen Zustand,
- Figur 16: schematisch eine perspektivische Ansicht des Elektromotors während der Befestigung am Getriebegehäuse,
- Figur 17: schematisch eine perspektivische Ansicht eines Ausschnitts mit einem Getriebegehäuseabschnitt mit einer Arretierkomponente und einer Rastnase,
- Figur 18: schematisch eine perspektivische Ansicht des Elektromotors und des Getriebegehäuses mit der Arretierkomponente gemäß Figur 17 im verbundenen Zustand,
- Figur 19: schematisch eine perspektivische Ansicht des Getriebegehäuses mit der Arretierkomponente gemäß Figur 17,
- Figur 20: schematisch ein Sitz mit einer Längsverstellereinheit, und
- Figuren 21 bis 25: schematisch in verschiedenen Ansichten ein weiteres Ausführungsbeispiel für eine Befestigungsanordnung B mit einem alternativen Motorarretierelement und einer alternativen Arretierkomponente.

Einander entsprechende Teile sind in allen Figuren mit den gleichen Bezugszeichen versehen.

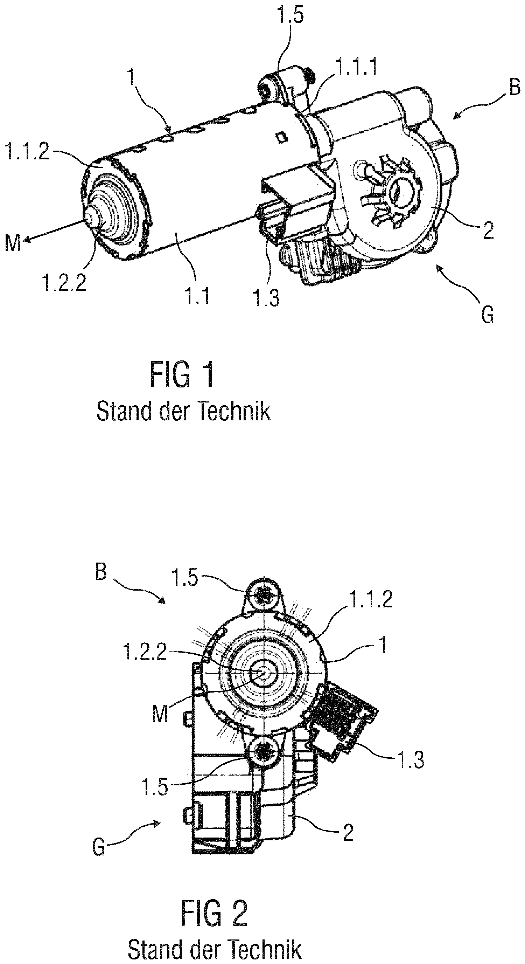

**Figur 1** zeigt in perspektivischer Darstellung eine Befestigungsanordnung B eines Elektromotors 1 an einer Getriebeeinheit G gemäß Standes der Technik. Der Elektromotor 1 und die Getriebeeinheit G bilden einen Getriebemotor oder Aktuator für eine Verstelleinheit, insbesondere eine Sitzverstelleinheit, beispielsweise eine Höhenverstelleinheit gemäß dem Stand der Technik.

Die Getriebeeinheit G umfasst zumindest ein Getriebegehäuse 2. **Figur 2** gemäß Stand der Technik zeigt eine Vorderansicht der herkömmlichen Befestigungsanordnung B gemäß Figur 1.

Der Elektromotor 1 ist beispielsweise ein Gleichstrommotor und umfasst einen drehbar gelagerten Rotor (nicht näher dargestellt) mit einer Rotorwelle 1.4, die sich um eine Motorachse M dreht. Der Rotor wird von einem ebenfalls nicht dargestellten Stator umgeben. Der Rotor und der Stator sind in einem gemeinsamen Elektromotorgehäuse 1.1 angeordnet. Ein jeweils stirnseitiges Ende des Elektromotorgehäuses 1.1 wird von einem Lagerschild 1.1.1, 1.1.2 in Form eines Gehäusedeckels gebildet.

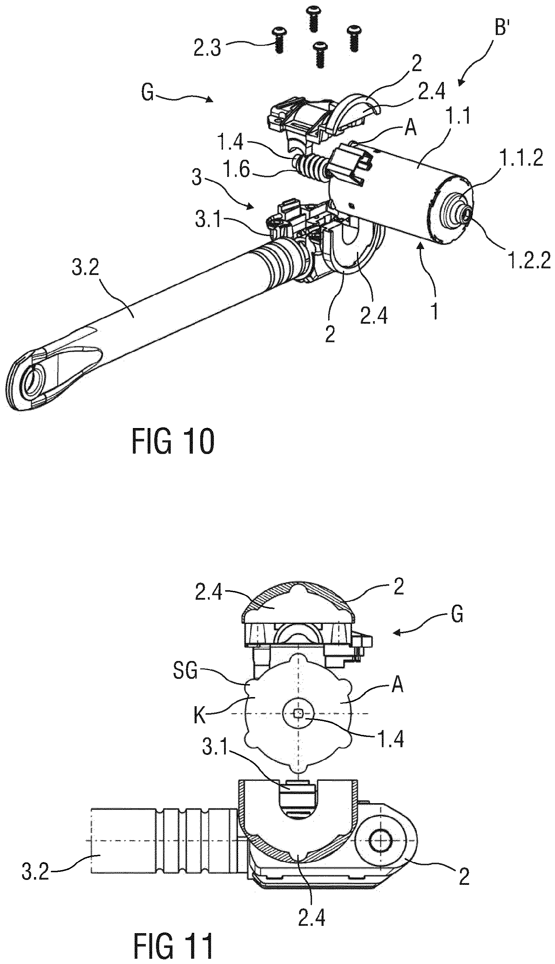

Des Weiteren ist an jeweils einem stirnseitigen Ende des Elektromotorgehäuses 1.1 ein koaxial zur Motorachse M positionierter Lagerzapfen 1.2.1, 1.2.2 angeordnet. Die Lagerzapfen 1.2.1, 1.2.2 sind jeweils durch das entsprechende Lagerschild 1.1.1, 1.1.2 hindurch geführt und ragen axial nach außen von diesem ab. Die Lagerzapfen 1.2.1, 1.2.2 weisen jeweils eine Durchgangsöffnung auf, wobei die Rotorwelle 1.4 durch den Lagerzapfen 1.2.1 hindurchgeführt ist. Die Rotorwelle 1.4 ist dem Getriebegehäuse 2 der Getriebeeinheit G zugewandt, welches mit einem im Getriebegehäuse 2 angeordneten Getriebe 3 (siehe Figur 10) verbunden wird. Der Elektromotor 1 und das Getriebe 3 bilden im verbundenen Zustand einen Getriebemotor.

Zur elektrischen Energieversorgung des Elektromotors 1 ist dieser mit einem elektrischen Anschluss 1.3 versehen. Der elektrische Anschluss 1.3 ist hierbei als Stecker ausgebildet, welcher mit einem äußeren Umfang des Elektromotorgehäuses 1.1 verbunden, insbesondere verrastet, ist. Der elektrische Anschluss 1.3 ist mittels bestimmter Verbindungskomponenten (nicht dargestellt) mit einem Bordnetz eines Fahrzeugs verbindbar, in welchem der Sitz S angeordnet ist.

Zur Befestigung des Elektromotors 1 am Getriebegehäuse 2 sind zwei Flansche 1.5 mit jeweils einer Durchgangsöffnung vorgesehen. Die Flansche 1.5 sind an der Abtriebsseite des Elektromotors 1 angeordnet und ragen radial nach außen vom Lagerschild 1.1.1 ab. Über die Flansche 1.5 wird der Elektromotor 1 mit dem Getriebegehäuse 2 kraftschlüssig verbunden. Beispielsweise werden durch die Durchgangsöffnungen der Flansche 1.5 Verbindungselemente geführt, die an Ausformungen des Getriebegehäuses 2 angeordnet sind. Die Verbindungselemente sind beispielsweise Verbindungsstifte, Schrauben, Bolzen etc.

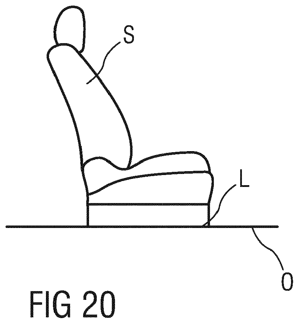

Der Elektromotor 1 und das Getriebe 3 bilden im verbundenen Zustand beispielsweise einen Getriebemotor zur Ausführung beispielsweise einer Höhenbewegung eines Sitzes S oder einer Längsbewegung mindestens einer in Figur 20 dargestellten Oberschiene O, die mit einem Sitzteil des Sitzes S verbunden ist. Der Getriebemotor treibt beispielsweise als Aktuator für eine Höhenbewegung das Sitzteil des Sitzes S an und bewegt dieses nach oben oder unten. Alternativ kann der Getriebemotor bei einer Ausbildung als Aktuator für eine Längsbewegung die Oberschiene O antreiben und bewegt diese relativ zu einer fahrzeugfesten Unterschiene (nicht dargestellt) in eine Längsrichtung.

Aufgrund der Flansche 1.5, die abtriebsseitig vom Lagerschild 1.1.1 des Elektromotorgehäuses 1.1 radial nach außen ragen, ist ein Durchmesser des Elektromotors 1 in diesem Bereich vergrößert, so dass ein entsprechend großer Bauraum zur Anordnung des Getriebemotors erforderlich ist.

Des Weiteren ist eine Einbaulage des Elektromotors 1 bezüglich einer Dreh- und Anordnungsposition relativ zum Getriebegehäuse 2 fest vorgegeben, so dass eine Lage, insbesondere eine Winkellage, des elektrischen Anschlusses 1.3 relativ zum Getriebegehäuse 2 ebenfalls fest vorgegeben ist.

Zur Verringerung eines Bauraumbedarfs für den Getriebemotor sowie für eine flexible Anordnung des Elektromotors 1 zumindest hinsichtlich einer Dreh- und Anordnungsposition relativ zum Getriebegehäuse 2 wird eine alternative Befestigungsanordnung B' vorgeschlagen, die im Folgenden näher beschrieben wird.

Die Erfindung wird dabei nachfolgend anhand der Befestigungsanordnung B' zwischen Elektromotor 1 und Getriebeeinheit G beschrieben. Alternativ kann die Befestigungsanordnung B' auch zwischen dem Elektromotor 1 und einem nicht näher dargestellten Trägerelement eines Sitzes S (siehe Figur 20) vorgesehen sein, wobei das Trägerelement des Sitzes S analog wie die nachfolgend beschriebene Getriebeeinheit G mit einer entsprechenden Befestigungskomponente, insbesondere einer entsprechenden Arretierkomponente 2.4, ausgestattet ist.

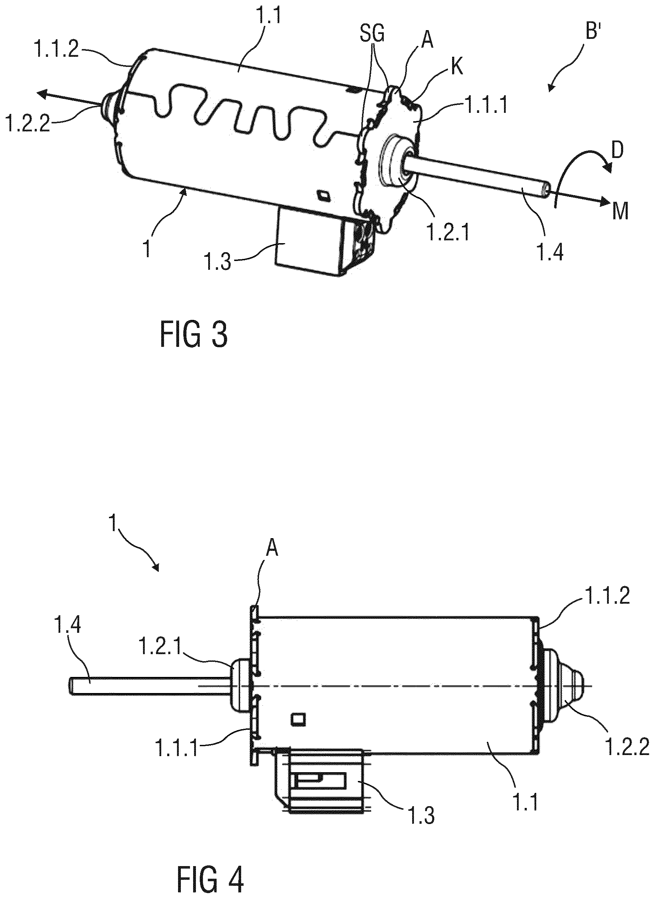

Dazu zeigen die **Figuren 3 und 4** ein Ausführungsbeispiel eines Elektromotors 1 ohne Getriebeeinheit G, wobei Figur 3 den Elektromotor 1 perspektivisch zeigt und wobei Figur 4 den Elektromotor 1 in Seitenansicht zeigt.

Der Elektromotor 1 umfasst ein Motorarretierelement A, welches eine Kontur K umfasst, die radial nach außen vom Elektromotorgehäuse 1.1 abragt. Insbesondere ist das Motorarretierelement A am stirnseitigen Ende einer Abtriebsseite des Elektromotors 1 angeordnet. Ein Durchmesser des Motorarretierelements A ist dabei größer als ein äußerer Durchmesser des Elektromotorgehäuses 1.1. Vorzugsweise weist das Motorarretierelement A jedoch nur einen geringen Überstand über dem äußeren Durchmesser des Elektromotorgehäuses 1.1 auf, so dass ein Bauraumbedarf des Elektromotors 1 gegenüber dem Bauraumbedarf des in Figur 1 und 2 beschriebenen Elektromotors 1 verringert ist.

Das Motorarretierelement A kann einteilig mit dem Lagerschild 1.1.1 der Abtriebsseite des Elektromotors 1 ausgebildet sein, wie es Figur 3 beispielhaft zeigt. Alternativ kann das Motorarretierelement A auch einteilig mit dem Elektromotorgehäuse 1.1 ausgebildet sein und von einem Rand abragen, welcher mit dem Lagerschild 1.1.1 verbunden ist. Denkbar ist auch, dass das Motorarretierelement A eine separate Komponente ist, die mit dem Elektromotorgehäuse 1.1 und/oder mit dem Lagerschild 1.1.1 verbunden wird, beispielsweise mittels Stoffschluss.

Ein äußerer Umfang des Motorarretierelements A weist gleichmäßig verteilte Segmente SG auf, um eine flexible Anordnung des Elektromotors 1 relativ zum Getriebegehäuse 2 zu ermöglichen. Im Folgenden wird das Motorarretierelement A näher beschrieben.

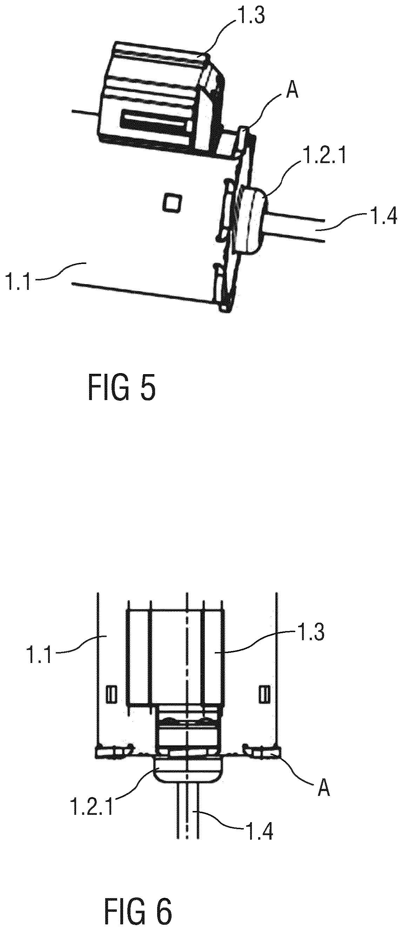

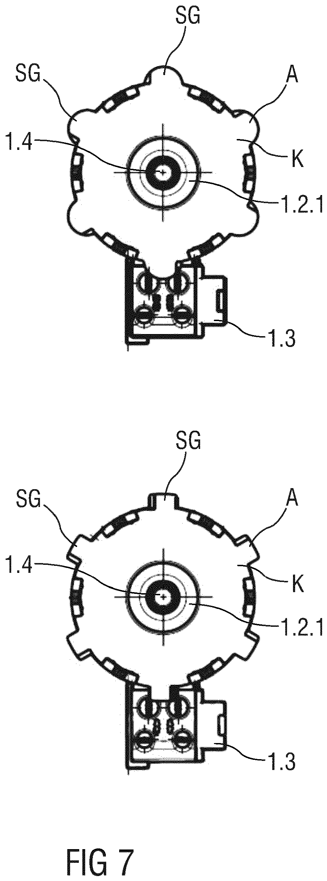

Die **Figuren 5 bis 7** zeigen Ausführungsbeispiele des Motorarretierelements A, wobei Figur 5 perspektivisch einen Ausschnitt mit dem Motorarretierelement A und dem elektrischen Anschluss 1.3 des Elektromotors 1 zeigt. Figur 6 zeigt eine Draufsicht auf den Ausschnitt gemäß Figur 5. Figur 7 zeigt zwei verschiedene Ausführungsbeispiele eines Elektromotors 1 mit einem Motorarretierelement A.

Im links gezeigten Ausführungsbeispiel des Elektromotors 1 weist das Motorarretierelement A sechs halbkreisförmige Segmente SG auf, die über den äußeren Umfang des Motorarretierelements A gleichmäßig verteilt sind. Im rechts gezeigten Ausführungsbeispiel des Elektromotors 1 weist das Motorarretierelement A sechs viereckige Segmente SG auf, die über den äußeren Umfang des Motorarretierelements A gleichmäßig verteilt sind.

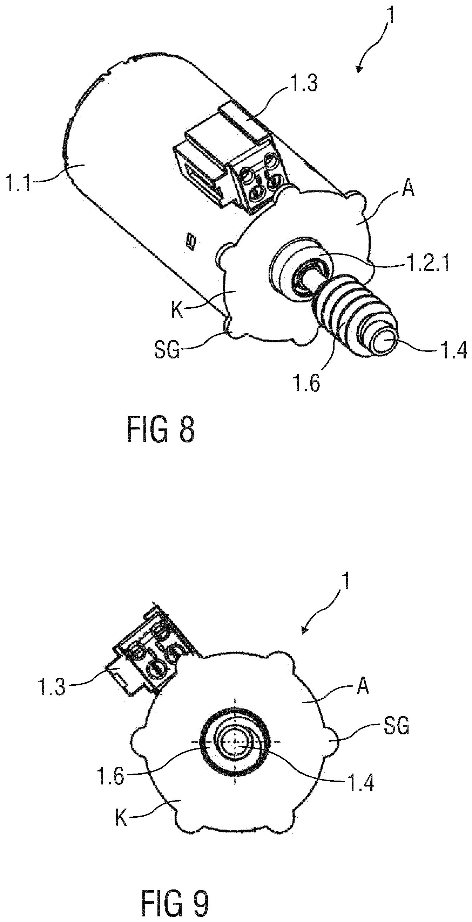

Die **Figuren 8 und 9** zeigen das in Figur 7 links gezeigte Ausführungsbeispiel des Elektromotors 1 in verschiedenen Ansichten. Insbesondere zeigt Figur 8 den Elektromotor 1 perspektivisch, wobei die Rotorwelle 1.4 mit einem Kraftübertragungselement 1.6 versehen ist, welches hierbei ein Gewinde zur Ausbildung eines Spindelantriebs mit dem Getriebe 3 darstellt. Figur 9 zeigt den Elektromotor 1 gemäß Figur 8 in einer Vorderansicht.

Die **Figuren 10 und 11** zeigen den Elektromotor 1 gemäß der Figuren 8 und 9 und die Getriebeeinheit G, insbesondere das Getriebegehäuse 2, in einem nicht verbundenen Zustand. Insbesondere zeigt Figur 9 den Elektromotor 1 gemäß der Figuren 8 und 9 und das Getriebegehäuse 2 perspektivisch. Figur 11 zeigt den Elektromotor 1 gemäß der Figuren 8 und 9 und das Getriebegehäuse 2 in einer Vorderansicht.

Das Getriebegehäuse 2 ist mehrteilig ausgeführt und umfasst zwei Teile, die miteinander kraftschlüssig verbunden werden. Dazu sind im vorliegenden Ausführungsbeispiel vier Schrauben 2.3 vorgesehen. Alternativ können auch andere Verbindungskomponenten verwendet werden.

Das Getriebegehäuse 2 nimmt das Getriebe 3 oder zumindest einen Teil des Getriebes 3 auf, welches hierbei mit dem Kraftübertragungselement 1.6 an der Rotorwelle 1.4 einen Spindelantrieb bildet, wobei dazu im Getriebegehäuse 2 ein Ritzel 3.1 angeordnet ist, welches mit dem Kraftübertragungselement 1.6 verbindbar und abtriebsseitig mit einer Welle 3.2 verbunden ist, die wiederum in nicht dargestellter Weise mittelbar der Oberschiene O verbindbar ist.

Des Weiteren weist die Getriebeeinheit G, insbesondere das Getriebegehäuse 2 eine zum Motorarretierelement A korrespondierende Arretierkomponente 2.4 auf, in die das Motorarretierelement A formschlüssig und/oder kraftschlüssig, insbesondere passgenau, eingreifen kann. Dazu ist die Arretierkomponente 2.4 beispielsweise als Negativform des Motorarretierelement A ausgebildet. Des Weiteren ist die Arretierkomponente 2.4 im vorliegenden Ausführungsbeispiel zweiteilig ausgebildet.

Dadurch, dass das Motorarretierelement A mehrere Segmente SG aufweist, die die gleiche Form aufweisen und gleichmäßig über den äußeren Umfang des Motorarretierelements A verteilt sind, sind in Abhängigkeit einer Anzahl der Segmente SG verschieden Drehpositionen D des Elektromotors 1 relativ zum Getriebegehäuse 2 möglich. Die Segmente SG sind als abstehende Nasen, Laschen oder Nocken ausgebildet und ragen vom Motorarretierelement A radial ab.

Beispielsweise weist das Motorarretierelement A sechs Segmente SG auf, wie es beispielhaft in Figur 11 gezeigt ist. Hierbei beträgt eine rotatorische Stufung der Drehposition D des Elektromotors 1 und damit des elektrischen Anschlusses 1.3 in Einbaulage des Elektromotors 1 relativ zum Getriebegehäuse 2 60°. D. h., der Elektromotor 1 kann in sechs verschiedenen Drehpositionen D relativ zum Getriebegehäuse 2 angeordnet werden, wobei die Drehpositionen D in Bezug auf die Motorachse M des Elektromotors 1 jeweils in einem Winkel von 60° zueinander versetzt sind.

Alternativ kann das Motorarretierelement A auch mehr als sechs Segmente SG aufweisen, so dass eine feinere rotatorische Abstufung möglich ist. Beispielsweise weist das Motorarretierelement A acht oder zehn Segmente SG auf.

Bei einer Montage des Getriebemotors, bei dem der Elektromotor 1 mit der Getriebeeinheit G, insbesondere dem mehrteiligen Getriebegehäuse 2 verbunden wird, kann der Elektromotor 1 mittels des Motorarretierelements A und der zweiteiligen Arretierkomponente 2.4 form- und/oder kraftschlüssig, insbesondere reibschlüssig und mittels Vorspannung spielfrei mit dem Getriebegehäuse 2 verbunden werden. Die Vorspannung wird dabei bei der Verschraubung des Getriebegehäuses 2 erzeugt.

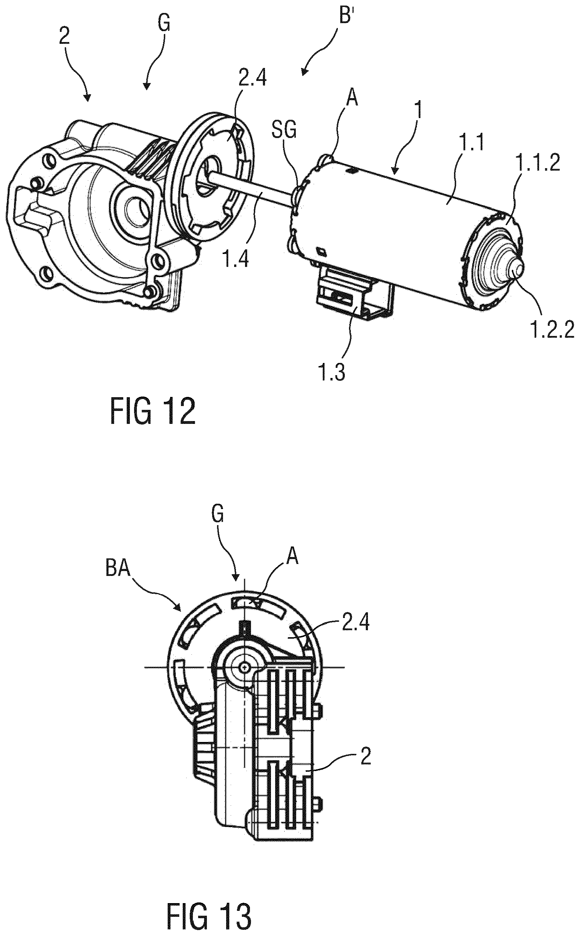

Die **Figuren 12 und 13** zeigen den Elektromotor 1 und das Getriebegehäuse 2 jeweils im nicht verbundenen Zustand ohne das Getriebe 3 und das Kraftübertragungselement 1.6, welches Teil des Getriebes 3 ist. Insbesondere zeigt Figur 12 den Elektromotor 1 und das Getriebegehäuse 2 perspektivisch. Figur 13 zeigt eine Rückansicht des Elektromotors 1 und des Getriebegehäuses 2, wobei der Elektromotor 1 in Betrachtungsrichtung hinter dem Getriebegehäuse 2 angeordnet ist.

Das Getriebegehäuse 2 und somit die Arretierkomponente 2.4 sind hierbei einteilig ausgebildet.

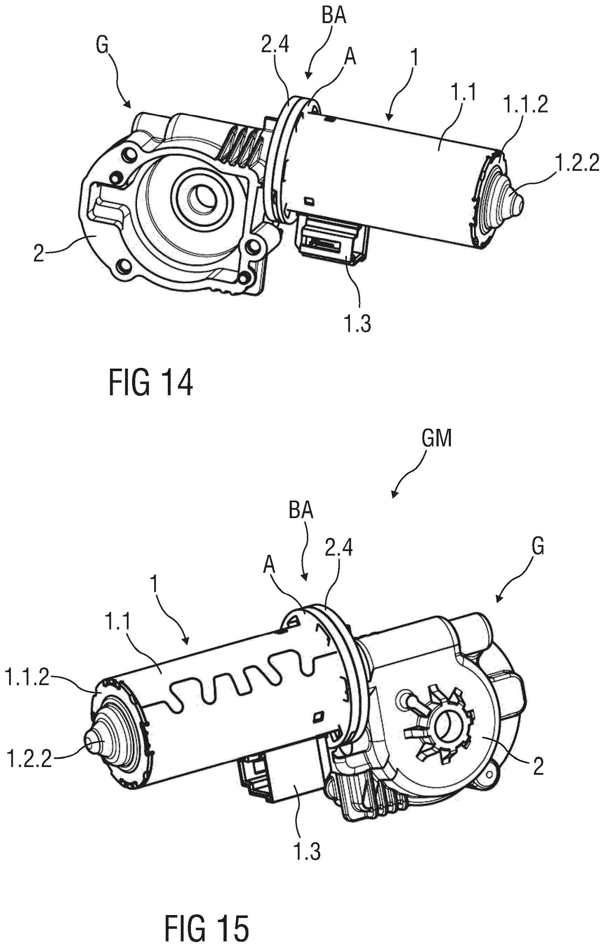

Die **Figuren 14 und 15** zeigen eine Anordnung des Elektromotors 1 an der Getriebeeinheit G, insbesondere an deren Getriebegehäuse 2, die im zusammengebauten Zustand einen elektrischen Getriebemotor GM bilden. Hierbei ist das Getriebegehäuse 2 einteilig ausgebildet und mit dem Kraftübertragungselement 1.6 verbunden. Das Getriebe 3 ist aus Gründen der Übersichtlichkeit nicht dargestellt. Insbesondere zeigt Figur 14 den Elektromotor 1 und das Getriebegehäuse 2 perspektivisch mit einer Innenseite des Getriebegehäuses 2. Figur 15 zeigt den Elektromotor 1 und das einteilig ausgebildete Getriebegehäuse 2 perspektivisch mit einer Außenseite des Getriebegehäuses 2.

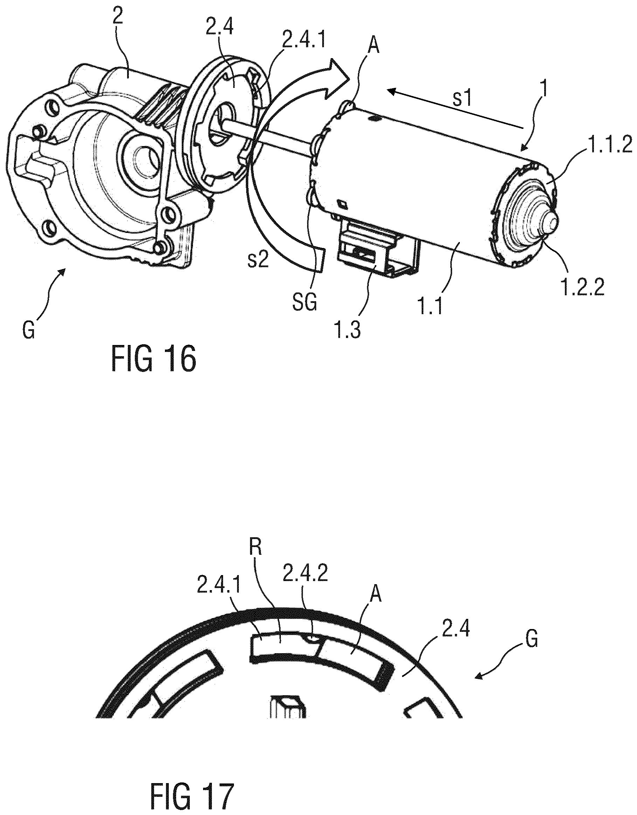

**Figur 16** zeigt perspektivisch den Elektromotor 1 und das einteilig ausgebildete Getriebegehäuse 2 während der Montage, wobei das Getriebe 3 aus Gründen der Übersichtlichkeit nicht dargestellt ist.

Der Elektromotor 1 wird axial in eine erste Pfeilrichtung s1 in das Getriebegehäuse 2 eingeschoben, bis das Motorarretierelement A an die Arretierkomponente 2.4 anschlägt. Anschließend wird der Elektromotor 1 in eine zweite Pfeilrichtung s2 gedreht, bis das Motorarretierelement A form- und/oder kraftschlüssig in der Arretierkomponente 2.4 aufgenommen ist. Mittels einer Anzahl von Rastelementen R kann die form- und/oder kraftschlüssige Verbindung zwischen dem Motorarretierelement A und der Arretierkomponente 2.4 verriegelt werden. Das Motorarretierelement A und die Arretierkomponente 2.4 bilden hierbei einen Bajonettverschluss BA.

Die Rastelemente R sind im vorliegenden Ausführungsbeispiel mittels Hinterschnitten 2.4.1 in der Arretierkomponente 2.4 gebildet, wie es Figur 16 und 17 beispielhaft zeigt.

**Figur 17** zeigt dazu perspektivisch eine teilweise Rückansicht der Arretierkomponente 2.4 mit Hinterschnitten 2.4.1, die jeweils mit einer Rastnase 2.4.2 versehen sind. Insbesondere ist eine Seite der Arretierkomponente 2.4 gezeigt, die dem Elektromotor 1 abgewandt ist.

Bei der Montage verrastet das Motorarretierelement A mittels Drehen der Segmente SG in die Hinterschnitte 2.4.1. Alternativ kann eine Verrastung auch durch eine leichte Verdrehung der Segmente SG des Motorarretierelements A sichergestellt werden, wobei das Motorarretierelement A relativ zum Elektromotorgehäuse 1.1 verdrehbar ist.

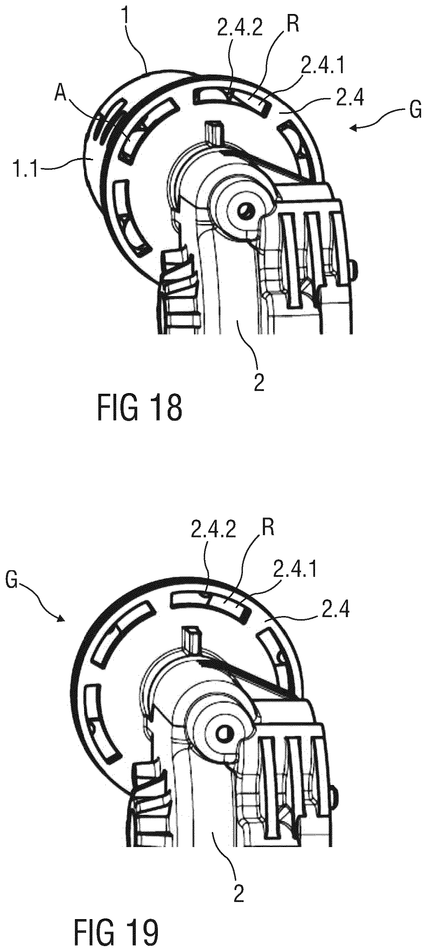

**Figur 18** zeigt perspektivisch eine Rückansicht des Elektromotors 1 und des Getriebegehäuses 2 im verbundenen Zustand, wobei der Elektromotor 1 in Betrachtungsrichtung hinter dem Getriebegehäuse 2 angeordnet ist.

**Figur 19** zeigt perspektivisch eine Rückansicht des Getriebegehäuses 2 ohne Elektromotor 1.

**Figur 20** zeigt einen Sitz S mit einer Längsverstellereinheit L, wobei der Sitz S beispielsweise ein Fahrzeugsitz ist.

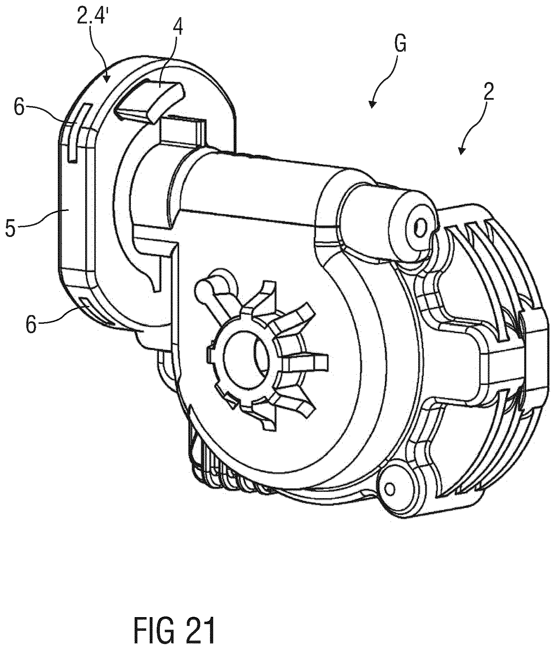

**Figuren 21 bis 25** zeigen schematisch in verschiedenen Ansichten ein weiteres Ausführungsbeispiel für eine Befestigungsanordnung B" eines elektrischen Getriebemotors GM.

**Figur 21** zeigt dabei das Getriebegehäuse 2 mit einer zusätzlichen Arretiereinheit 4. Die Arretiereinheit 4 ist als ein zusätzlicher Rastpin oder eine vom Getriebegehäuse 2 abstehende Nase oder Lasche ausgebildet. Die Arretiereinheit 4 ist als ein separates Element ausgebildet, das am Getriebegehäuse 2 form- oder kraftschlüssig gehalten wird, beispielsweise gesteckt und gerastet wird.

Die Arretiereinheit 4 dient als zusätzlicher radialer Anschlag. Hierdurch ist der Elektromotor 1 in radialer Richtung unverdrehbar festlegbar. Hierzu ist die vom Elektromotor 1 abgewandte und von der Arretierkomponente 2.4' abragende Arretiereinheit 4 derart ausgebildet, dass diese im zusammengebauten Zustand von Getriebeeinheit G und Elektromotor 1 in Richtung des Elektromotors 1 in die Arretierkomponente 2.4', insbesondere in den Flanschkragen 5 eingedrückt werden kann, so dass der Verschluss, insbesondere der Bajonettverschluss BA', verriegelt ist und nicht geöffnet werden kann. Dazu steht die Arretiereinheit 4 in dem hier nicht gezeigten verriegelten Zustand an der dem hier ebenfalls nicht gezeigten Elektromotor 1 zugewandten Seite der Arretierkomponente 2.4' über.

Das Getriebegehäuse 2 umfasst eine alternative Arretierkomponente 2.4' zur Aufnahme und form- und/oder kraftschlüssige Arretierung eines alternativen Motorarretierelements A', das korrespondierend zur alternativen Arretierkomponente 2.4' ausgebildet ist.

Die Arretierkomponente 2.4' weist dabei einen verlängerten Flanschkragen 5 auf. In den Flanschkragen 5 können optional umlaufend ein oder mehrere Schlitze 6 angeordnet sein. Der oder die Schlitze 6 dienen insbesondere zur visuellen Prüfung und Anzeige der Arretierung des Motorarretierelements A' in der Arretierkomponente 2.4' und damit der Anzeige des arretierten Zustands.

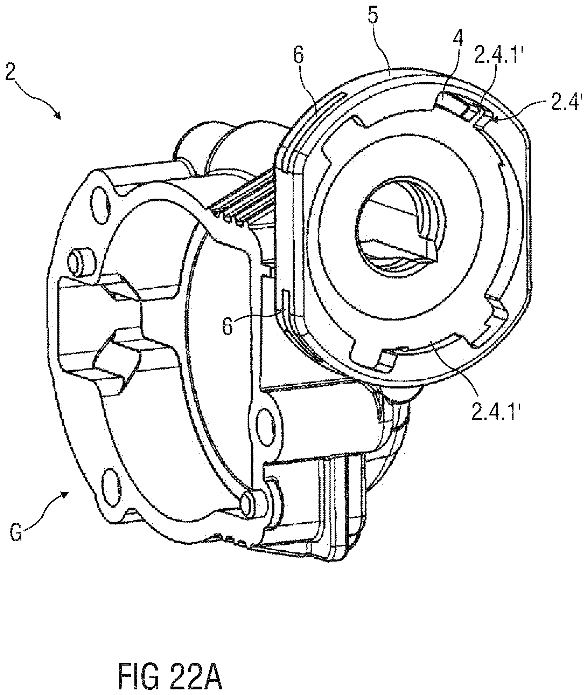

In **Figuren 22A bis 22C** ist die alternative Befestigungsanordnung B" mit der alternativen Arretierkomponente 2.4' und dem alternativen Motorarretierelement A' im Detail gezeigt. Dabei umfasst die Befestigungsanordnung B" anstelle von sechs Segmenten SG vier Segmente SG', insbesondere Rastlaschen oder Rastnasen.

**Figur 22A** zeigt das Getriebegehäuse 2 mit der alternativen Arretierkomponente 2.4', welche den Flanschkragen 5 mit den Schlitzen 6 umfasst. Die Arretierkomponente 2.4' umfasst Hinterschnitte 2.4.1', in welche die Segmente SG' durch Verdrehen rastend eingreifen. Die Anzahl der Hinterschnitte 2.4.1' entspricht dabei der Anzahl der Segmente SG'. Dabei sind die Segmente SG', beispielsweise abstehende Nasen, Nocken oder Laschen, mittels Reibkraft im jeweiligen Hinterschnitt 2.4.1' gehalten. Zusätzlich können im jeweiligen schlitzförmigen Hinterschnitt 2.4.1' Rastelemente R, beispielsweise Rastnasen, Rasthaken oder Rastrippen, angeordnet sein, in welche die Segmente SG' zusätzlich formschlüssig, insbesondere rastend eingreifen.

Die Hinterschnitte 2.4.1' können dabei im Bereich der optionalen Schlitze 6 der Arretierkomponente 2.4' eingebracht sein. Somit ist im eingerasteten Zustand, wenn das jeweilige Segment SG' im zugehörigen

Hinterschnitt 2.4.1' angeordnet, insbesondere form- und/oder kraftschlüssig, beispielsweise rastend, gehalten ist, eine äußere Stirnseite SS des Segments SG' durch den zugehörigen Schlitz 6 sichtbar. Hierzu kann beispielsweise die äußere Stirnseite SS markiert, insbesondere farblich markiert sein.

Die Arretiereinheit 4 steht in dem hier gezeigten nicht verriegelten Zustand an der dem hier nicht gezeigten Elektromotor 1 abgewandten Seite der Arretierkomponente 2.4' noch immer über, wie in der vorbeschriebenen Figur 21.

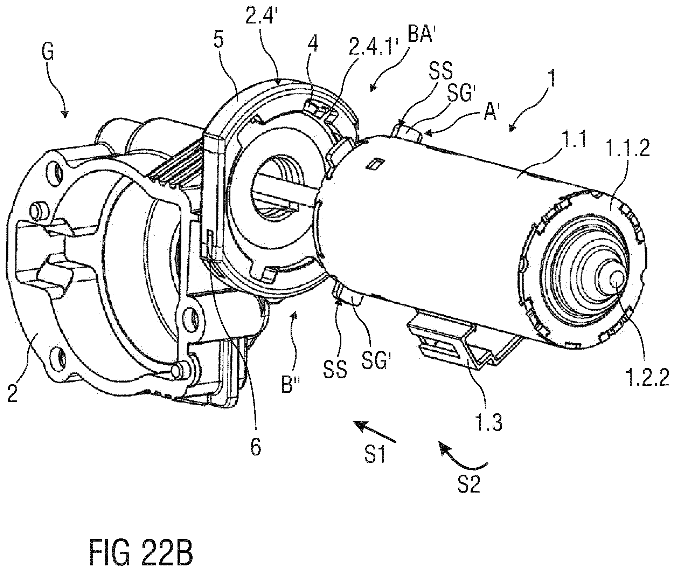

**Figur 22B** zeigt die Getriebeeinheit G und den Elektromotor 1 vor dem Zusammenbau. Der Elektromotor 1 wird axial gemäß Pfeilrichtung s1 in das Getriebegehäuse 2 eingeschoben, bis das Motorarretierelement A' an die Arretierkomponente 2.4' anschlägt. Anschließend wird der Elektromotor 1 gemäß Pfeilrichtung s2 gedreht, bis das Motorarretierelement A' form- und/oder kraftschlüssig in der Arretierkomponente 2.4', insbesondere im Hinterschnitt 2.4.1' arretiert wird. Das Motorarretierelement A' und die Arretierkomponente 2.4' der Getriebeeinheit G bilden hierbei einen Bajonettverschluss BA'. Die Arretiereinheit 4 steht in dem hier gezeigten nicht verriegelten Zustand an der dem Elektromotor 1 abgewandten Seite der Arretierkomponente 2.4' noch immer über, wie in der vorgbeschriebenen Figur 22a.

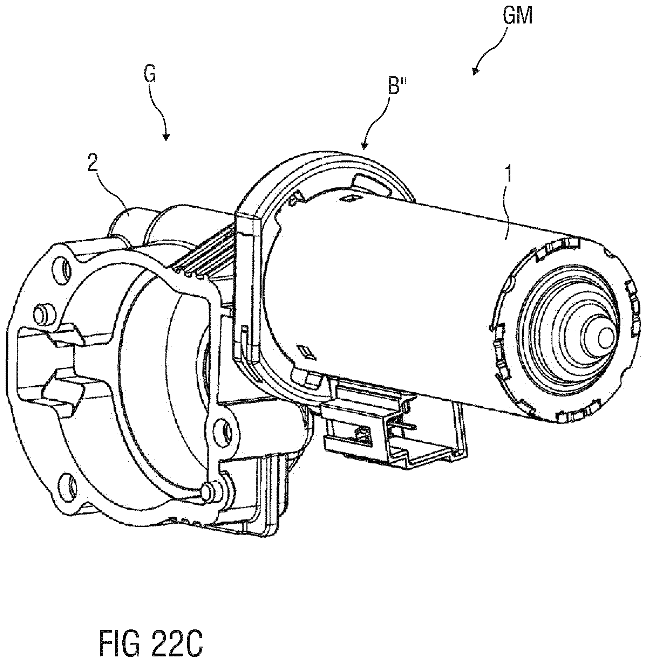

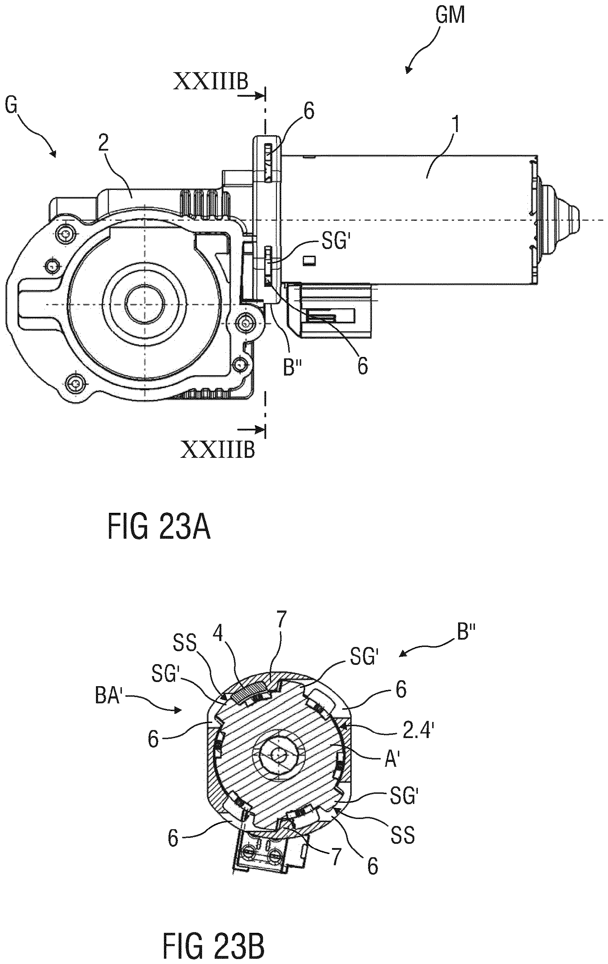

**Figur 22C bis 23B** zeigen die Getriebeeinheit G und den Elektromotor 1 im arretierten Zustand der Befestigungsanordnung B" in verschiedenen Ansichten. Figur 22C zeigt eine perspektivische Ansicht und Figuren 23A und 23B zeigen eine Seitendarstellung bzw. eine Schnittdarstellung im Bereich der Befestigungsanordnung B".

Wie in **Figur 23B** gezeigt, sind nur zwei der, insbesondere einander gegenüberliegenden Segmente SG' des Motorarretierelementes A' im Hinterschnitt 2.4.1' der Arretierkomponente 2.4' derart angeordnet, dass diese durch den entsprechenden Schlitz 6 im Flanschkragen 5 der Arretierkomponente 2.4' von außen sichtbar sind. Die anderen beiden gegenüberliegenden Segmente SG' sind im jeweiligen Hinterschnitt 2.4.1' derart angeordnet, dass diese an einen Anschlag 7 der Arretierkomponente 2.4' anschlagen und die Arretierbewegung des Elektromotors 1 begrenzen. Zusätzlich ist der Elektromotor 1 mittels des Bajonettschlusses BA' in Rotationsrichtung festgelegt und arretiert.

Die Arretiereinheit 4 ist derart zwischen die beiden oben gezeigten Segmente SG' des Motorarretierelementes A' bringbar, dass das Motorarretierelementes A' im Bajonettschluss BA' verriegelbar oder verriegelt ist.

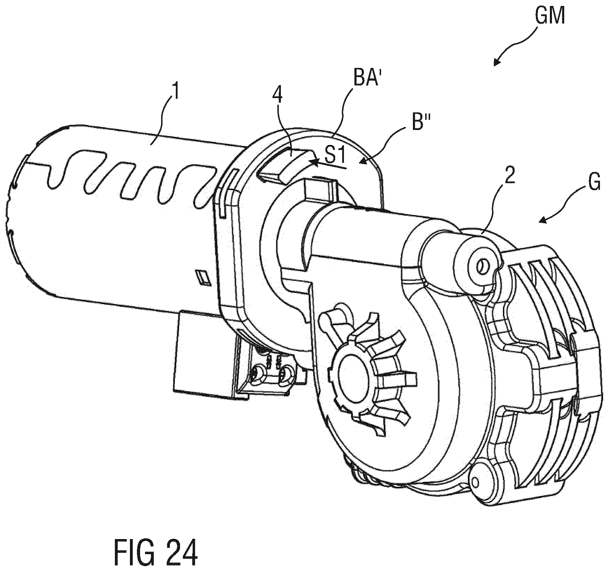

**Figur 24** zeigt den elektrischen Getriebemotor GM, insbesondere die Getriebeeinheit G und den Elektromotor 1 mit der zusätzlichen Arretiereinheit 4 im zusammengebauten und noch nicht verriegelten Zustand. Um in den verriegelten Zustand zu gelangen muss die Arretiereinheit 4 in Richtung der ersten Pfeilrichtung s1 eingedrückt werden.

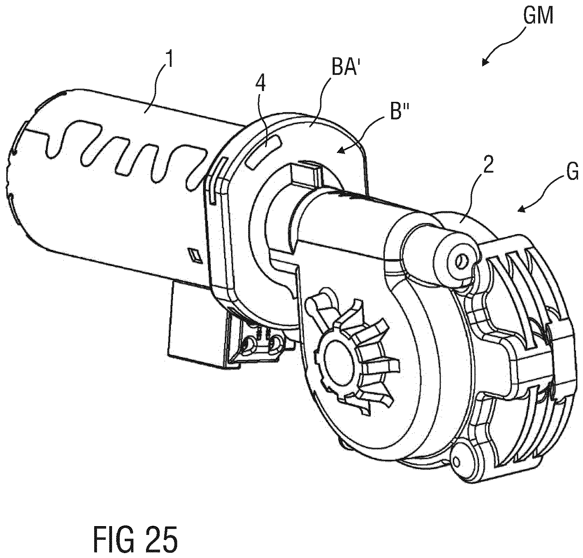

**Figur 25** zeigt die Getriebeeinheit G und den Elektromotor 1 mit eingedrückter zusätzlicher Arretiereinheit 4 im zusammengebauten und infolge der eingedrückten Arretiereinheit 4 verriegelten Zustand. Dabei ist die Arretiereinheit 4 in Richtung des Elektromotors 1 gemäß Pfeilrichtung s1 in die Arretierkomponente 2.4', insbesondere in den Flanschkragen 5 hineingedrückt und sperrt somit den Bajonettverschluss BA', insbesondere die Segmente SG'.

### Bezugszeichenliste

- 1: Elektromotor
- 1.1: Elektromotorgehäuse
- 1.1.1, 1.1.2: Lagerschild
- 1.2.1, 1.2.2: Lagerzapfen
- 1.3: elektrischer Anschluss
- 1.4: Rotorwelle
- 1.5: Flansch
- 1.6: Kraftübertragungselement
- 2: Getriebegehäuse
- 2.3: Schraube
- 2.4, 2.4': Arretierkomponente
- 2.4.1, 2.4.1': Hinterschnitt
- 2.4.2: Rastnase
- 3: Getriebe
- 3.1: Ritzel
- 3.2: Welle
- 4: Arretiereinheit
- 5: Flanschkragen
- 6: Schlitz
- 7: Anschlag

- A, A': Motorarretierelement
- B, B', B": Befestigungsanordnung
- BA, BA': Bajonettverschluss
- D: Drehposition
- G: Getriebeeinheit
- GM: Elektrischer Getriebemotor
- K: Kontur
- L: Längsverstellereinheit
- M: Motorachse
- O: Oberschiene
- R: Rastelement
- S: Sitz
- SG, SG': Segment
- SS: Stirnseite

- s1: erste Pfeilrichtung
- s2: zweite Pfeilrichtung

## Patentansprüche

1. Getriebeeinheit (G), umfassend mindestens ein Getriebegehäuse (2) mit mindestens einer Arretierkomponente (2.4, 2.4') zur form- und/oder kraftschlüssigen Befestigung eines Elektromotors (1) an der Getriebeeinheit (G),
wobei das Getriebegehäuse (2) als zusätzlichen radialen Anschlag eine zusätzliche Arretiereinheit (4) aufweist, welche in die Arretierkomponente (2.4) für einen verriegelten Zustand eindrückbar ist, wobei die Arretierkomponente (2.4, 2.4') als ein umlaufender Rand oder Flanschkragen (5) ausgebildet ist, in welchen eine Anzahl von Hinterschnitten (2.4.1, 2.4.1') eingebracht sind, in welchen der Elektromotor (1) in eine von mehreren vorbestimmbaren Stellungen mittels eines Form- oder Kraftschlusses arretierbar ist.

2. Trägerelement mit mindestens einer Arretierkomponente (2.4, 2.4') zur form- und/oder kraftschlüssigen Befestigung eines Elektromotors (1) an dem Trägerelement, wobei das Trägerelement als zusätzlichen radialen Anschlag eine zusätzliche Arretiereinheit (4) aufweist, welche in die Arretierkomponente (2.4) für einen verriegelten Zustand eindrückbar ist, wobei die Arretierkomponente (2.4, 2.4') als ein umlaufender Rand oder Flanschkragen (5) ausgebildet ist, in welchen eine Anzahl von Hinterschnitten (2.4.1, 2.4.1') eingebracht sind, in welchen der Elektromotor (1) in eine von mehreren vorbestimmbaren Stellungen mittels eines Form- oder Kraftschlusses arretierbar ist.

3. Elektrischer Getriebemotor (GM), mit einer Getriebeeinheit (G) nach Anspruch 1 oder einem Trägerelement nach Anspruch 2, umfassend
- zumindest einen Elektromotor (1) mit einer Befestigungsanordnung (B', B") zur Befestigung des Elektromotors (1) an der Getriebeeinheit (G) oder dem Trägerelement, wobei die Befestigungsanordnung (B', B") mindestens ein Motorarretierelement (A, A') umfasst,
wobei das Motorarretierelement (A, A') derart ausgebildet ist, dass eine Drehposition (D) des Elektromotors (1) relativ zur Getriebeeinheit (G) oder zum Trägerelement voreinstellbar und eine voreingestellte Drehposition (D) des Elektromotors (1) mittels eines Form- oder Kraftschlusses arretierbar ist und
- die Arretierkomponente (2.4, 2.4') form- und/oder kraftschlüssig mit dem Motorarretierelement (A, A') verbindbar ist.

4. Elektrischer Getriebemotor (GM) nach Anspruch 3, wobei die zumindest eine Arretierkomponente (2.4, 2.4') an dem Getriebegehäuse (2) der Getriebeeinheit (G) angeordnet ist.

5. Elektrischer Getriebemotor (GM) nach Anspruch 3 oder 4, wobei die Arretierkomponente (2.4) eine Anzahl von Rastelementen (R) zur Verrastung des Elektromotors (1) mit dem Getriebegehäuse (2) aufweist.

6. Elektrischer Getriebemotor (GM) nach einem der Ansprüche 3 bis 5, wobei das Motorarretierelement (A, A') derart ausgebildet ist, dass der Elektromotor (1) in axialer Richtung unverschiebbar festgelegt und mittels einer Drehmomentsperre gegen Verdrehung gesichert ist.

7. Elektrischer Getriebemotor (GM) nach einem der Ansprüche 3 bis 6, wobei das mindestens eine Arretierelement (A, A') eine radial nach außen abragende Kontur (K) umfasst, die an einem stirnseitigen Ende eines Elektromotorgehäuses (1.1) angeordnet ist.

8. Elektrischer Getriebemotor (GM) nach Anspruch 7, wobei ein Durchmesser der Kontur (K) größer ist als ein äußerer Durchmesser des Elektromotorgehäuses (1.1).

9. Elektrischer Getriebemotor (GM) nach Anspruch 7 oder 8, wobei ein Umfangsverlauf der Kontur (K) gleichmäßig verteilte Segmente (SG, SG') aufweist, die in eine Umfangsrichtung jeweils zueinander beabstandet sind.

10. Elektrischer Getriebemotor (GM) nach einem der Ansprüche 7 bis 9, wobei die Arretiereinheit (4) als ein separates Element ausgebildet ist.

11. Elektrischer Getriebemotor (GM) nach einem der Ansprüche 7 bis 10, wobei Arretierkomponente (2.4) eine Ausnehmung aufweist, deren Form und Größe mit der Form und Größe der Arretiereinheit (4) derart korrespondiert, dass die Arretiereinheit (4) zur Herstellung des verriegelten Zustandes in Richtung des Elektromotors (1) in dessen Längsrichtung eindrückbar ist.

12. Elektrischer Getriebemotor (GM) nach Anspruch 11, wobei die Arretiereinheit (4) in die Ausnehmung der Arretierkomponente (2.4) einrastbar ist.

13. Sitz (S) mit einem elektrischen Getriebemotor (GM) nach einem der Ansprüche 3 bis 12.

14. Sitz (S) nach Anspruch 13, wobei die Arretierkomponente (2.4, 2.4') einteilig oder mehrteilig ausgebildet ist.

15. Sitz (S) nach einem der Ansprüche 13 oder 14, wobei die Befestigungsanordnung (B', B") einen Bajonettverschluss (BA, BA') umfasst.

## Claims

1. Gear unit (G), comprising at least one gear housing (2) having at least one locking component (2.4, 2.4') for the form-fit and/or force-fit attachment of an electric motor (1) to the gear unit (G),
wherein the gear housing (2) has an additional locking unit (4) as an additional radial stop, which is able to be pressed into the locking component (2.4) to achieve a locked state,
wherein the locking component (2.4, 2.4') is configured as a circumferential edge or flange collar (5), in which a number of undercuts (2.4.1, 2.4.1') are incorporated, in which the electric motor (1) by means of a form fit or force fit is lockable in one of a plurality of predeterminable positions.

2. Support element having at least one locking component (2.4, 2.4') for the form-fit and/or force-fit attachment of an electric motor (1) to the support element, wherein the support element has an additional locking unit (4) as an additional radial stop, which is able to be pressed into the locking component (2.4) to achieve a locked state; wherein the locking component (2.4, 2.4') is configured as a circumferential edge or flange collar (5), in which a number of undercuts (2.4.1, 2.4.1') are incorporated, in which the electric motor (1) by means of a form fit or force fit is lockable in one of a plurality of predeterminable positions.

3. Electric gear motor (GM), having a gear unit (G) according to Claim 1 or a support element according to Claim 2, comprising
- at least one electric motor (1) having a fastening arrangement (B', B") for fastening the electric motor (1) on the gear unit (G) or the support element, wherein the fastening arrangement (B', B") comprises at least one motor locking element (A, A'),
wherein the motor locking element (A, A') is configured such that a rotary position (D) of the electric motor (1) relative to the gear unit (G) or the support element is preadjustable and a preadjusted rotary position (D) of the electric motor (1) is lockable by means of a form fit or a force fit, and
- the locking component (2.4, 2.4') is connectable in a form-fitting and/or force-fitting manner to the motor locking element (A, A').

4. Electric gear motor (GM) according to Claim 3, wherein the at least one locking component (2.4, 2.4') is arranged on the gear housing (2) of the gear unit (G).

5. Electric gear motor (GM) according to Claim 3 or 4, wherein the locking component (2.4) comprises a number of detent elements (R) for interlocking the electric motor (1) with the gear housing (2).

6. Electric gear motor (GM) according to one of Claims 3 to 5, wherein the motor locking element (A, A') is configured in such a manner that the electric motor (1) is secured immovably in the axial direction and prevented from twisting by a torque lock.

7. Electric gear motor (GM) according to one of Claims 3 to 6, wherein the at least one locking element (A, A') comprises a radially outward protruding contour (K), which is arranged at a front end of an electric motor housing (1.1).

8. Electric gear motor (GM) according to Claim 7, wherein a diameter of the contour (K) is larger than an outer diameter of the electric motor housing (1.1).

9. Electric gear motor (GM) according to Claim 7 or 8, wherein a circumferential profile of the contour (K) has uniformly distributed segments (SG, SG') which are in each case spaced apart from each other in a circumferential direction.

10. Electric gear motor (GM) according to one of Claims 7 to 9, wherein the locking unit (4) is configured as a separate element.

11. Electric gear motor (GM) according to one of Claims 7 to 10, wherein the locking component (2.4) has a recess, the size and shape of which corresponds to the size and shape of the locking unit (4) such that the locking unit (4) is able to be pressed in the direction of the electric motor (1) in its longitudinal direction in order to establish the locked state.

12. Electric gear motor (GM) according to Claim 11, wherein the locking unit (4) is engageable in the recess of the locking component (2.4).

13. Seat (S) having an electric gear motor (GM) according to one of Claims 3 to 12.

14. Seat (S) according to Claim 13, wherein the locking component (2.4, 2.4') has a single-piece or multiple-piece configuration.

15. Seat (S) according to one of Claims 13 and 14, wherein the fastening arrangement (B', B") comprises a bayonet lock (BA, BA').

## Revendications

1. Unité de transmission (G), comportant au moins un carter de transmission (2) doté d'au moins un composant de blocage (2.4, 2.4') pour la fixation par complémentarité de formes et/ou par force d'un moteur électrique (1) à l'unité de transmission (G), le carter de transmission (2) comprenant, comme butée radiale supplémentaire, une unité de blocage (4) supplémentaire, laquelle peut être enfoncée dans le composant de blocage (2.4) pour un état verrouillé, le composant de blocage (2.4, 2.4') étant réalisé sous la forme d'un bord périphérique ou d'un collet de bride (5), dans lequel un nombre de contre-dépouilles (2.4.1, 2.4.1') sont ménagées, dans lesquelles le moteur électrique (1) peut être bloqué par engagement par complémentarité de formes ou par force dans une parmi plusieurs positions pouvant être prédéfinies.

2. Elément porteur comportant au moins un composant de blocage (2.4, 2.4') pour la fixation par complémentarité de formes et/ou par force d'un moteur électrique (1) à l'élément porteur, l'élément porteur comprenant, comme butée radiale supplémentaire, une unité de blocage (4) supplémentaire, laquelle peut être enfoncée dans le composant de blocage (2.4) pour un état verrouillé, le composant de blocage (2.4, 2.4') étant réalisé sous la forme d'un bord périphérique ou d'un collet de bride (5), dans lequel un nombre de contre-dépouilles (2.4.1, 2.4.1') sont ménagées, dans lesquelles le moteur électrique (1) peut être bloqué par engagement par complémentarité de formes ou par force dans une parmi plusieurs positions pouvant être prédéfinies.

3. Motoréducteur électrique (GM), comportant une unité de transmission (G) selon la revendication 1 ou un élément porteur selon la revendication 2, comportant
- au moins un moteur électrique (1) doté d'un ensemble de fixation (B', B") pour la fixation du moteur électrique (1) à l'unité de transmission (G) ou à l'élément porteur, l'ensemble de fixation (B', B") comportant au moins un élément de blocage de moteur (A, A'),
l'élément de blocage de moteur (A, A') étant réalisé de telle sorte qu'une position de rotation (D) du moteur électrique (1) par rapport à l'unité de transmission (G) ou par rapport à l'élément porteur peut être préréglée et qu'une position de rotation (D) préréglée du moteur électrique (1) peut être bloquée par engagement par complémentarité de forme ou par force et
- le composant de blocage (2.4, 2.4') pouvant être relié par complémentarité de forme ou par force à l'élément de blocage de moteur (A, A').

4. Motoréducteur électrique (GM) selon la revendication 3, l'au moins un composant de blocage (2.4, 2.4') étant disposé sur le carter de transmission (2) de l'unité de transmission (G).

5. Motoréducteur électrique (GM) selon la revendication 3 ou 4, le composant de blocage (2.4) comprenant un nombre d'éléments d'encliquetage (R) pour l'encliquetage du moteur électrique (1) avec le carter de transmission (2).

6. Motoréducteur électrique (GM) selon l'une des revendications 3 à 5, l'élément de blocage de moteur (A, A') étant réalisé de telle sorte que le moteur électrique (1) est assujetti de manière non déplaçable dans la direction axiale et est fixé de manière à empêcher une rotation au moyen d'un blocage de couple.

7. Motoréducteur électrique (GM) selon l'une des revendications 3 à 6, l'au moins un élément de blocage (A, A') comportant un contour (K) faisant saillie radialement vers l'extérieur, lequel est disposé à une extrémité frontale du carter de moteur électrique (1.1).

8. Motoréducteur électrique (GM) selon la revendication 7, un diamètre du contour (K) étant supérieur à un diamètre extérieur du carter de moteur électrique (1.1).

9. Motoréducteur électrique (GM) selon la revendication 7 ou 8, un profil périphérique du contour (K) comprenant des segments (SG, SG') répartis uniformément, lesquels sont espacés les uns des autres respectivement dans une direction périphérique.

10. Motoréducteur électrique (GM) selon l'une des revendications 7 à 9, l'unité de blocage (4) étant réalisée comme un élément séparé.

11. Motoréducteur électrique (GM) selon l'une des revendications 7 à 10, le composant de blocage (2.4) comprenant un évidement dont la forme et la taille correspondent à la forme et à la taille de l'unité de blocage (4) de telle sorte que l'unité de blocage (4), pour la réalisation de l'état verrouillé, peut être enfoncée dans la direction du moteur électrique (1) dans sa direction longitudinale.

12. Motoréducteur électrique (GM) selon la revendication 11, l'unité de blocage (4) pouvant être encliquetée dans l'évidement du composant de blocage (2.4).

13. Siège (S) comportant un motoréducteur (GM) selon l'une des revendications 3 à 12.

14. Siège (S) selon la revendication 13, le composant de blocage (2.4, 2.4') étant réalisé en une partie ou en plusieurs parties.

15. Siège (S) selon l'une des revendications 13 ou 14, l'ensemble de fixation (B', B") comportant une fermeture à baïonnette (BA, BA').
